# EUROPÄISCHE PATENTSCHRIFT

(11) **EP 2 708 771 B1**
(45) Veröffentlichungstag und Bekanntmachung des Hinweises auf die Patenterteilung: **05.04.2017**
(21) Anmeldenummer: 13183327.9
(22) Anmeldetag: 06.09.2013
(51) Int. Cl.: F16D 66/02, B60T 17/22

(54) **Vorrichtung zur Belagdickenbestimmung von Bremsbelägen**
Device for determining the thickness of brake pads
Dispositif de détermination de l'épaisseur de garnitures de frein

(30) Priorität: 12.09.2012 DE 102012017961
(43) Veröffentlichungstag der Anmeldung: 19.03.2014
(73) Patentinhaber: BPW Bergische Achsen KG, 51674 Wiehl (DE)
(72) Erfinder: Müller, Sebastian, 51674 Wiehl (DE)
(74) Vertreter: Bungartz Christophersen Partnerschaft mbB Patentanwälte

(56) Entgegenhaltungen:
- EP-A1- 0 168 303
- DE-A1- 4 212 279
- DE-A1- 19 637 394
- DE-C1- 4 213 581

## Beschreibung

Die Erfindung betrifft eine Vorrichtung zur Belagdickenbestimmung von Bremsbelägen einer aus einem fahrzeugfesten Bremsträger und einem die Bremsbeläge gegen eine Bremsscheibe beaufschlagenden Bremssattel bestehenden Scheibenbremse, wobei der Bremssattel über eine Längsführung aus einer Führungsbohrung und einem darin angeordneten Führungsholm längsbeweglich gegenüber dem Bremsträger ist, und wobei im Bereich der Längsführung ein Distanzerfassungsmittel angeordnet ist, welches ein zweiteilig aufgebauter Magnetfeldsensor ist, und wobei das eine der beiden Teile am freien Ende des Führungsholms und das andere der beiden Teile in Verlängerung des Führungsholms im Bereich der Führungsbohrung befestigt ist.

Bei Scheibenbremsen für Fahrzeuge ist auch außerhalb der Serviceintervalle eine Kontrolle des Reibbelagverschleißes an den Bremsbelägen, den sogenannten Bremspads, erforderlich. Hierzu sind bereits in vielfältigen Ausführungen elektrische Verschleißsensoren bekannt. So ist in der DE 102 11 813 A1 für eine Gleitsattelscheibenbremse ein mit Ultraschall arbeitendes Sensierungsverfahren bekannt. Bestandteile sind ein reflektierbare Signale aussendender Sender und ein die reflektierten Signale empfangender Empfänger, die mit einer Auswerteelektronik in Verbindung stehen. Vorgeschlagen wird insbesondere, den Ultraschallsender und den Ultraschallempfänger gegenüber der Bremsscheibe und den Belagträgern der Scheibenbremse ortsfest zu installieren. Nachteilig ist die konstruktiv relativ aufwändige Anordnung von Sender und Empfänger, wobei eine Nachrüstung bereits vorhandener Gleitsattelbremsen Schwierigkeiten bereitet.

Aus der DE 102 01 901 A1 ist zum Zwecke einer Belagverschleißanzeige eine Zweipunkt-Sensierung im Bereich der Führungsholme bekannt, auf welchen der Bremssattel einer Gleitsattelscheibenbremse gegenüber dem Bremsträger axial verschiebbar gelagert ist. Als Verschleißanzeige ist an einem der Führungsholme, in einem von außen einsehbaren Bereich, ein Zeigeelement befestigt. Maßstab für den Bremsbelagverschleiß ist dessen Position in Bezug auf zwei Markierungen, die außen am Bremssattel angegossen sind.

Eine Vorrichtung zur Belagdickenbestimmung von Bremsbelägen nach dem Oberbegriff der unabhängigen Ansprüche ist aus der EP 0 168 303 A1 bekannt. Bei einer Scheibenbremse, die aus einem fahrzeugfesten Bremsträger und einem Bremssattel besteht, ist der Bremssattel über eine Längsführung an dem Bremsträger gelagert. Die Längsführung besteht aus einer Führungsbohrung und einem darin angeordneten Führungsholm. Im Bereich der Längsführung ist ein Distanzerfassungsmittel angeordnet, welches als zweiteilig aufgebauter Distanzsensor ausgebildet ist. Das eine der beiden Teile ist am freien Ende des Führungsholms, und das andere der beiden Teile in Verlängerung des Führungsholms im Bereich der Führungsbohrung befestigt.

Aus der DE 42 12 279 A1 ist es zur Überwachung des Verschleißes von Bremsbelägen bekannt, zwischen einem hydraulisch betätigbaren Bremskolben der Scheibenbremse und dem den Kolben führenden Bremszylinder als Distanzsensor einen Hall-Generator einzusetzen.

Der Erfindung liegt die **Aufgabe** zugrunde, eine für eine kontinuierliche elektronische Auswertung geeignete Belagdickenbestimmung von Bremsbelägen einer Scheibenbremse und insbesondere Gleitsattelscheibenbremse zu erzielen, wobei die Fähigkeit angestrebt ist, die bei Scheibenbremsen auftretenden Schwingungen und teils hohen Temperaturen auszuhalten.

Zur Lösung wird eine Vorrichtung mit den Merkmalen des Patentanspruchs 1 vorgeschlagen. Das Distanzerfassungsmittel zur Belagdickenbestimmung ist ein Magnetfeldsensor. Ein solcher Sensor zeichnet sich in Bezug auf Temperatur und Verschmutzung durch seine Robustheit aus. Er bietet zudem die Voraussetzung, die erfindungsgemäße Vorrichtung zur Erzielung einer kontinuierlichen, elektronischen Auswertung der noch vorhandenen Reibbelagdicke an einer vorhandenen Scheibenbremse nachzurüsten. Konkret ist der Abstandssensor ein Magnetfeldsensor nach dem Hall-Prinzip. Ein solcher Sensor umfasst neben dem eigentlichen Hall-Sensor einen Permanentmagneten.

Ferner wird mit Patentanspruch 5 bei einer Vorrichtung zur Belagdickenbestimmung vorgeschlagen, dass das Distanzerfassungsmittel ein Abstandssensor ist, dass eine mit dem Signalausgang des Abstandssensors verbundene elektronische Auswerteeinheit außerdem mit dem Signalausgang eines den Zustellweg Z der Scheibenbremse erfassenden weiteren Sensors verbunden ist, und dass die elektronische Auswerteeinheit ein Subtraktionsglied aufweist.

Durch Anordnung des Abstandssensors bzw. Magnetfeldsensors im Bereich der Längsführung des Bremssattels wird eine Distanz erfasst, welche für den Verschleiß des einen, üblicherweise des fahrzeugaußen angeordneten Bremsbelags charakteristisch ist. Hingegen wird der Belagdickenverschleiß des jeweils anderen, üblicherweise fahrzeuginnen angeordneten Bremsbelags, nicht abgebildet. Häufig zeigen die zu beiden Seiten der Bremsscheibe angeordneten Bremsbeläge einen zumindest ähnlichen Abnutzungsgrad, so dass durch die elektronische Auswerteeinheit Rückschlüsse auch auf die noch vorhandene Belagdicke des anderen Bremsbelags gezogen werden können. Andererseits ermöglicht die Vorrichtung, durch ein Subtraktionsverfahren auch den Verschleiß bzw. die restliche Belagdicke des nicht unmittelbar sensierten Bremsbelags rechnerisch zu ermitteln. Dementsprechend wird eine mit dem Signalausgang des Abstandssensors verbundene elektronische Auswerteeinheit vorgeschlagen, die außerdem mit dem Signalausgang eines den Zustellweg Z der Scheibenbremse erfassenden weiteren Sensors verbunden ist, wobei die elektronische Auswerteeinheit ein Subtraktionsglied aufweist.

Hierbei ist der weitere Sensor in der Weise ausgestaltet, dass er den gesamten Zustellweg der Scheibenbremse erfasst, also jene Länge, um die der üblicherweise bei Scheibenbremsen vorhandene Druckstempel sich in Bezug auf den Bremssattel, in dem der Druckstempel geführt ist, bewegt hat. Von dieser Länge wird im Subtraktionsglied der durch den Abstandssensor bzw. Magnetfeldsensor erfasste Längsweg subtrahiert, um so auch jenes Maß zu erhalten, um das sich die Belagdicke des anderen, üblicherweise fahrzeuginneren Bremsbelags reduziert hat.

In Bezug auf einen solchen, insgesamt aus dem eigentlichen Hall-Sensor und dem Permanentmagneten aufgebauten Sensor wird mit einer Ausgestaltung der Erfindung vorgeschlagen, dass das eine dieser beiden Teile am freien Ende des Führungsholms, und das andere der beiden Teile in Verlängerung des Führungsholms im Bereich der Führungsbohrung befestigt ist. Vorzugsweise ist, in Bezug auf eine erleichterte Kabelführung, der Hall-Sensor im Bereich der Führungsbohrung befestigt, und der Permanentmagnet an dem Führungsholm.

Mit einer weiteren Ausgestaltung wird vorgeschlagen, dass der Hall-Sensor innen an einer Kappe befestigt ist, durch welche die Führungsbohrung in Verlängerung des Führungsholms nach außen verschlossen ist. Das Signalkabel kann in diesem Fall durch die Kappe hindurchgeführt sein, oder zur Vermeidung jeglichen Durchtritts von Schmutz oder Feuchtigkeit in einem gemeinsamen Spritzprozess mit der Kabelisolierung hergestellt sein.

Weitere Vorteile und Einzelheiten ergeben sich aus der nachfolgenden Beschreibung eines Ausführungsbeispiels, wobei auf die Zeichnungen Bezug genommen wird. Darin zeigen:
- Fig. 1: eine stark schematische Darstellung einer mit einer Vorrichtung zur Belagdickenbestimmung der Bremsbeläge versehenen Nutzfahrzeug-Scheibenbremse;
- Fig. 2a: einen Schnitt durch den Bremssattel sowie den den Bremssattel führenden Bremsträger der Nutzfahrzeug-Scheibenbremse, wobei die Anordnung jene ist, wie sie sich bei neuen, noch unverbrauchten Bremsbelägen einstellt und
- Fig. 2b: die Gegenstände nach Fig. 2a im Falle bereits stark abgenutzter Bremsbeläge.

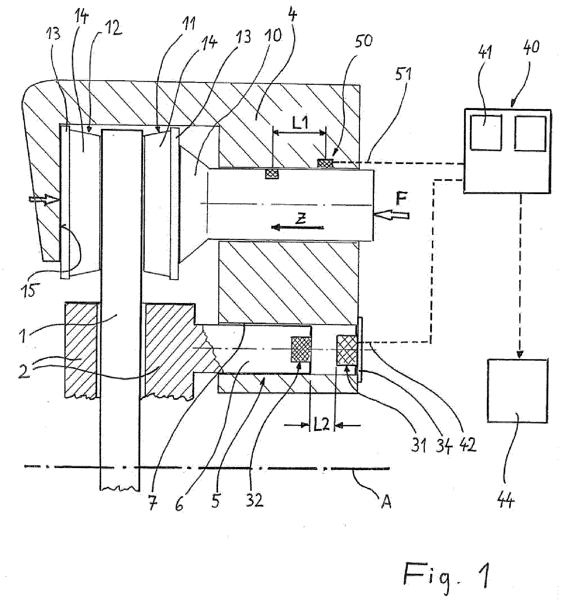

Die Fig. 1 zeigt eine auf der Raddrehachse A rotierende Bremsscheibe 1 einer Gleitsattelscheibenbremse. Starr an einem nicht dargestellten Achselement des Fahrzeugs ist ein Bremsträger 2 befestigt. Entsprechend dem Prinzip einer Scheibenbremse vom Gleitsatteltyp bzw. Schwimmsatteltyp ist die Bremsscheibe 1 axial unveränderbar in Bezug auf den Bremsträger 2, und umgekehrt.

Mittels einer Längsführung 5 ist an dem Bremsträger 2 ein Bremssattel 4 gelagert, wobei eine Relativbewegung nur in Längsrichtung der Raddrehachse A möglich ist. Die Längsführung 5 setzt sich im Wesentlichen zusammen aus einem zapfenförmigen, mit seinem einen Ende starr am Bremsträger 2 befestigten Führungsholm 6 sowie einer korrespondierenden, in dem Bremssattel 4 ausgebildeten Führungsbohrung 7. Üblicherweise verfügen Gleitsattelscheibenbremsen nicht nur über eine solche Längsführung 5, sondern über zwei Längsführungen, wobei die eine Längsführung das sogenannte Festlager, und die andere Längsführung das sogenannte Loslager bildet. Die hier beschriebene Vorrichtung zur Belagdickenbestimmung lässt sich sowohl in Verbindung mit dem Festlager, als auch in Verbindung mit dem Loslager der Scheibenbremse realisieren.

Bestandteil des Bremssattels 4 ist ein darin parallel zur Raddrehachse A geführter Einfach- oder Doppelstempel 10, welcher mit einer Kraft F gegen den fahrzeuginneren Bremsbelag 11 der Scheibenbremse arbeitet. Die Betätigung des Stempels 10 kann mechanisch erfolgen oder durch hydraulische oder pneumatische Mittel. Üblicherweise sind Nutzfahrzeugbremsen pneumatisch betätigt, wobei ein an der Rückseite des Bremssattels 4 angeflanschter, druckluftbetriebener Bremszylinder über einen in dem Bremssattel 4 angeordneten Verstärkungsmechanismus auf den Einfach- oder Doppelstempel 10 arbeitet. In den Mechanismus integriert ist eine Nachstellvorrichtung. Diese sorgt für ein gleichbleibendes Lüftspiel der Bremse unabhängig vom Verschleißfortschritt der sich jeweils aus einer Belagrückenplatte 13 und dem eigentlichen Reibbelag 14 zusammensetzenden Bremsbeläge 11, 12.

Der Bremssattel 4 übergreift von außen die Anordnung aus Bremsscheibe 1 und den beiden Bremsbelägen 11, 12, wobei sich eine fahrzeugaußen angeordnete Druckfläche 15 des Bremssattels 4 gegen die Belagrückenplatte 13 des fahrzeugäußeren Bremsbelags 12 abstützt. Die Druckfläche 15 ist dem Druckstempel 10 gegenüberliegend an dem Bremssattel 4 ausgebildet.

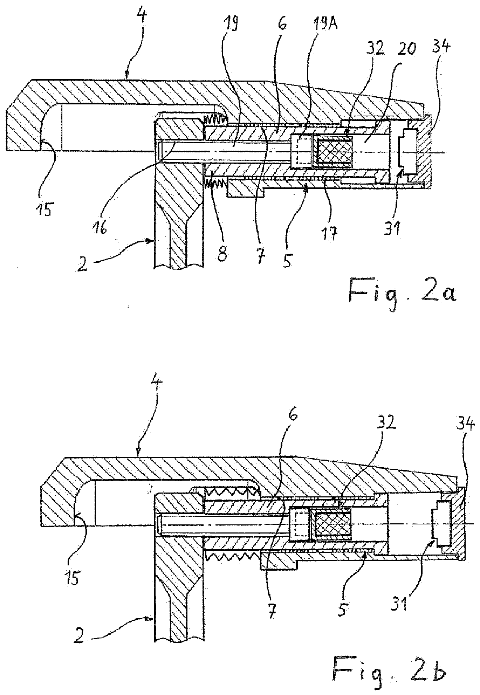

Gemäß der detaillierteren Darstellung Fig. 2a gleitet der Führungsholm 6 nicht unmittelbar in der Führungsbohrung 7 des Bremssattels 4, vielmehr ist zusätzlich eine Führungshülse 17 vorhanden, welche axial unveränderbar im Bremssattel sitzt und den eigentlichen Gleitpartner für den zylindrischen Führungsholm 6 bildet.

Zur Befestigung des nicht freien Endes 8 des Führungsholms 6 an dem Bremsträger 2 ist in den Führungsholm eine Schraube 19 eingesetzt, welche sich mit ihrem Schraubenkopf 19A an einer Stufe im Inneren des Führungsholms 6 abstützt und zugleich mit ihrem Außengewinde in eine Gewindebohrung 16 des Bremsträgers 2 greift.

Am freien Ende des Führungsholms 6 ist in eine unter anderem den Schraubenkopf 19A aufnehmende Ausnehmung 20 des Führungsholms 6 ein Permanentmagnet 32 eines Magnetfeldsensors eingesetzt, welcher sich aus dem Permanentmagneten sowie einem Hall-Sensor 31 zusammensetzt. Der Hall-Sensor 31 ist dem Permanentmagneten 32 gegenüberliegend im Bereich der Führungsbohrung 7 befestigt, und zwar innen an einer Kappe 34, welche die Führungsbohrung 7 in Verlängerung des Führungsholms 6 verschließt. Um ein Eindringen von Staub oder Feuchtigkeit in das Innere der Längsführung 5 zu verhindern, ist die Kappe als Schraubkappe 34 ausgebildet und mit ihrem Außengewinde in ein entsprechendes Innengewinde am Ende der Führungsbohrung 7 eingeschraubt. Für eine zusätzliche Abdichtung kann dort noch ein O-Ring vorgesehen sein.

Der Hall-Sensor 31 ist innen an der Schraubkappe 34 in geeigneter Weise befestigt, wodurch er eine Lage mit einem Längsabstand L2 (Fig. 1) gegenüberliegend zu dem Permanentmagneten 32 einnimmt.

Der Hall-Sensor arbeitet als Abstands- bzw. Distanzsensor und erzeugt eine elektrische Spannung, die sogenannte Hall-Spannung, welche proportional zur magnetischen Induktion und zur Stromdichte ist. Aufgebaut ist der Hall-Sensor aus einem Halbleiter, der von einem Steuerstrom einer Steuer- und Auswerteeinheit 40 durchflossen und von einem Magnetfeld unter einem Winkel mit einer magnetischen Induktion durchsetzt wird. Infolge der dabei auftretenden Lorentz-Kraft kommt es zu einer Ablenkung der Ladungsträger aus dem Steuerstrom. Durch die Abdrängung der sich im Magnetfeld bewegenden Ladungsträger bildet sich an den gegenüberliegenden Längsseiten des Halbleiters die Hall-Spannung aus. Dabei durchfließt der Steuerstrom einen Eingangswiderstand, und der Laststrom einen Ausgangswiderstand. Die Vorteile dieses Sensortyps sind seine Robustheit, da er keinem nennenswerten Einfluss durch Temperatur oder Verschmutzung ausgesetzt ist. Notwendig ist ein Magnetfeld, welches durch den Permanentmagneten 32 erzeugt wird. Dieses Magnetfeld wird vom Hall-Sensor 31 erkannt, in eine elektrische Größe umgewandelt und über den Signalausgang 42 an die elektronische Auswerteeinheit 40 übermittelt.

Der Permanentmagnet 32 besteht vorzugsweise aus Aluminiumnickelkobalt (AINiCo) und ist als Topfkernmagnet gestaltet. Durch diese Bauart wird ein geschirmter Aufbau erzielt mit dem Vorteil, dass der Permanentmagnet 32 nicht unnötig auch sein weiteres Umfeld magnetisiert.

Der Hall-Sensor 31 arbeitet mit einer Gleichspannung zwischen 4,5 und 5,5 Volt und einer Schaltfrequenz von 2 kHz. Die Betriebsspannung von ca. 5 Volt hat den Vorteil der weltweiten Einsatzmöglichkeit. Denn in den meisten Ländern hat das Bordnetz der Lastkraftwagen und Nutzfahrzeuganhänger eine Spannung von 24 Volt. Eine solche Bordnetzspannung kann ohne großen Aufwand mittels eines Festspannungsreglers auf die für den Betrieb des Hall-Sensors erforderlichen 5 Volt reduziert werden.

Der Hall-Sensor bietet als Distanz- bzw. Abstandssensor die Voraussetzung für eine berührungslose, kontinuierliche Sensierung der Reibbelagdicke mit eindeutiger Erfassung eines Abstandswerts und damit Längenwerts. Der Sensor schafft damit die messtechnische Grundlage, um jederzeit aus dem sensierten Längenwert die noch vorhandene Reibbelagstärke abzuleiten. Er lässt sich im Bereich der Längsführung 5 aus Führungsholm 6 und Führungsbohrung 7 mit relativ geringem Aufwand einbauen, und insbesondere bei einer vorhandenen Scheibenbremse nachrüsten.

Der Hall-Sensor als Distanz- bzw. Abstandssensor zeichnet sich in Bezug auf Temperatur und Verschmutzung durch seine Robustheit aus sowie durch die Fähigkeit, Distanzen mit großer Genauigkeit zu erfassen. Sein konstruktiv einfacher Aufbau schafft zudem die Voraussetzung, um die erfindungsgemäße Vorrichtung zur Erzielung einer kontinuierlichen, elektronischen Auswertung an vorhandenen Scheibenbremsen nachzurüsten.

Gemäß der schematischen Darstellung Fig. 1 wird durch die Abstandsmessung des Hall-Sensors 31 der Längenwert L2 bestimmt, welcher repräsentativ für den seit dem letzten Belagwechsel eingetretenen Reibbelagverschleiß an dem fahrzeugäußeren Bremsbelag 12 ist.

Sofern die Vorrichtung zur Belagdickenbestimmung neben dem elektrischen Abstandssensor 31 auch mindestens einen weiteren elektrischen Sensor 50 umfasst, welcher als Längenwert L1 den bisher, d.h. seit dem letzten Austausch beider Bremsbeläge 11, 12 durch Nachstellung der Scheibenbremse zurückgelegten Zustellweg Z erfasst, ermöglicht die Vorrichtung in einem Subtraktionsverfahren auch die Berechnung des Reibbelagverschleißes an dem anderen, also dem fahrzeuginneren Bremsbelag 11.

Hierzu gelangt signaltechnisch über den elektrischen Signalausgang 42 des Abstandssensors 31 der Längenwert L2, und über den elektrischen Signalausgang 51 des weiteren Sensors 50 der Längenwert L1 zu einem Subtraktionsglied 41, welches Bestandteil der elektronischen Steuer- und Auswerteeinheit 40 ist. Im Subtraktionsglied 41 wird L2 von L1 abgezogen, und so ein Längenwert erhalten, welcher repräsentativ für die noch vorhandene Belagdicke an dem fahrzeuginneren Bremsbelag 11 ist.

Bestandteil der Vorrichtung zur Belagdickenbestimmung ist ferner ein signaltechnisch mit der elektronischen Steuer- und Auswerteeinheit 40 verbundenes, optisch oder akustisch arbeitendes Anzeigeelement 44. Dieses gibt den aktuellen Verschleißgrad der Bremsbeläge wieder und gibt zudem eine Warnmitteilung, wenn ein in der Steuer- und Auswerteeinheit 40 vorgegebener Verschleißgrad erreicht oder überschritten ist. Das Anzeigeelement 44 ist vorzugsweise für den Fahrzeuglenker gut sichtbar in der Armaturentafel des Fahrzeugs angeordnet.

### Bezugszeichenliste

- 1: Bremsscheibe
- 2: Bremsträger
- 4: Bremssattel
- 5: Längsführung
- 6: Führungsholm
- 7: Führungsbohrung
- 8: Ende
- 10: Stempel, Druckstempel
- 11: Bremsbelag
- 12: Bremsbelag
- 13: Belagrückenplatte
- 14: Reibbelag
- 15: Druckfläche
- 16: Gewindebohrung
- 17: Führungshülse
- 19: Schraube
- 19A: Schraubenkopf
- 20: Ausnehmung
- 31: Abstandssensor, Magnetfeldsensor bzw. Hall-Sensor
- 32: Permanentmagnet
- 34: Schraubkappe
- 40: Steuereinheit, Auswerteeinheit
- 41: Subtraktionsglied
- 42: Signalausgang
- 44: Anzeigeelement
- 50: weiterer Sensor
- 51: Signalausgang

- A: Raddrehachse
- F: Kraft
- L1: Längenwert
- L2: Längenwert
- Z: Zustellweg

## Patentansprüche

1. Vorrichtung zur Belagdickenbestimmung von Bremsbelägen einer aus einem fahrzeugfesten Bremsträger (2) und einem die Bremsbeläge (11, 12) gegen eine Bremsscheibe (1) beaufschlagenden Bremssattel (4) bestehenden Scheibenbremse, wobei der Bremssattel (4) über eine Längsführung (5) aus einer Führungsbohrung (7) und einem darin angeordneten Führungsholm (6) längsbeweglich gegenüber dem Bremsträger (2) ist, und wobei im Bereich der Längsführung (5) ein Distanzerfassungsmittel angeordnet ist, welches ein zweiteilig aufgebauter Magnetfeldsensor (31) ist, und wobei das eine der beiden Teile am freien Ende des Führungsholms (6) und das andere der beiden Teile in Verlängerung des Führungsholms (6) im Bereich der Führungsbohrung (7) befestigt ist, **dadurch gekennzeichnet, dass** der Magnetfeldsensor aus einem Hall-Sensor (31) und einem Permanentmagneten (32) aufgebaut ist und der Signalausgang (42) des Magnetfeldsensors (31) mit einer elektronischen Auswerteeinheit (40) verbunden ist, die außerdem mit dem Signalausgang (51) eines den Zustellweg (Z) der Scheibenbremse erfassenden weiteren Sensors (50) verbunden ist, wobei die elektronische Auswerteeinheit (40) ein Subtraktionsglied aufweist.

2. Vorrichtung nach Anspruch 1, **dadurch gekennzeichnet, dass** das nicht freie Ende des Führungsholms (6) an dem Bremsträger (2) befestigt ist, und sich die Führungsbohrung (7) im Bremssattel (4) befindet.

3. Vorrichtung nach einem der Ansprüche 1 oder 2, **dadurch gekennzeichnet, dass** der Permanentmagnet (32) am Führungsholm (6), und der Hall-Sensor (31) im Bereich der Führungsbohrung (7) befestigt ist.

4. Vorrichtung nach Anspruch 3, **dadurch gekennzeichnet, dass** der Hall-Sensor (31) innen an einer Kappe (34) befestigt ist, durch welche die Führungsbohrung (7) in Verlängerung des Führungsholms (6) verschlossen ist.

5. Vorrichtung zur Belagdickenbestimmung von Bremsbelägen einer aus einem fahrzeugfesten Bremsträger (2) und einem die Bremsbeläge (11, 12) gegen eine Bremsscheibe (1) beaufschlagenden Bremssattel (4) bestehenden Scheibenbremse, wobei der Bremssattel (4) über eine Längsführung (5) aus einer Führungsbohrung (7) und einem darin angeordneten Führungsholm (6) längsbeweglich gegenüber dem Bremsträger (2) ist, und wobei im Bereich der Längsführung (5) ein Distanzerfassungsmittel angeordnet ist, welches ein Abstandssensor (31) ist, **dadurch gekennzeichnet, dass** eine mit dem Signalausgang (42) des Abstandssensors (31) verbundene elektronische Auswerteeinheit (40) außerdem mit dem Signalausgang (51) eines den Zustellweg (Z) der Scheibenbremse erfassenden weiteren Sensors (50) verbunden ist, und dass die elektronische Auswerteeinheit (40) ein Subtraktionsglied (41) aufweist.

## Claims

1. Device for determining the thickness of brake pads of a disc brake consisting of a brake carrier (2) which is secured to the vehicle and of a brake caliper (4) which presses the brake pads (11, 12) against a brake disc (1), wherein the brake caliper (4) is movable longitudinally relative to the brake carrier (2) via a longitudinal guide (5) consisting of a guide bore (7) and a guide rod (6) arranged therein, and wherein there is arranged in the region of the longitudinal guide (5) a distance detection means which is a magnetic field sensor (31) formed of two parts, and wherein one of the two parts is attached to the free end of the guide rod (6) and the other of the two parts is attached in the extension of the guide rod (6) in the region of the guide bore (7), **characterized in that** the magnetic field sensor is formed of a Hall sensor (31) and a permanent magnet (32) and the signal output (42) of the magnetic field sensor (31) is connected to an electronic evaluation unit (40) which is additionally connected to the signal output (51) of a further sensor (50) which detects the advancing travel (Z) of the disc brake, wherein the electronic evaluation unit (40) has a subtraction element.

2. Device according to claim 1, **characterized in that** the non-free end of the guide rod (6) is attached to the brake carrier (2) and the guide bore (7) is located in the brake caliper (4).

3. Device according to any of claims 1 or 2, **characterized in that** the permanent magnet (32) is attached to the guide rod (6) and the Hall sensor (31) is attached in the region of the guide bore (7).

4. Device according to claim 3, **characterized in that** the Hall sensor (31) is attached to the inside of a cap (34) by which the guide bore (7) in the extension of the guide rod (6) is closed.

5. Device for determining the thickness of brake pads of a disc brake consisting of a brake carrier (2) which is secured to the vehicle and of a brake caliper (4) which presses the brake pads (11, 12) against a brake disc (1), wherein the brake caliper (4) is movable longitudinally relative to the brake carrier (2) via a longitudinal guide (5) consisting of a guide bore (7) and a guide rod (6) arranged therein, and wherein there is arranged in the region of the longitudinal guide (5) a distance detection means which is a distance sensor (31), **characterized in that** an electronic evaluation unit (40) which is connected to the signal output (42) of the distance sensor (31) is additionally connected to the signal output (51) of a further sensor (50) which detects the advancing travel (Z) of the disc brake, and **in that** the electronic evaluation unit (40) has a subtraction element (41).

## Revendications

1. Dispositif de détermination de l'épaisseur de garnitures de frein d'un frein à disque constitué d'un support de frein (2) fixé au véhicule et d'un étrier de frein (4) sollicitant les garnitures de frein (11, 12) contre un disque de frein (1), l'étrier de frein (4) pouvant être déplacé longitudinalement par rapport au support de frein (2) par le biais d'un guide longitudinal (5) constitué d'un alésage de guidage (7) et d'un longeron de guidage (6) disposé dans celui-ci, et un moyen de détection de distance étant disposé dans la région du guide longitudinal (5), lequel est un capteur de champ magnétique (31) construit en deux parties, et l'une des deux parties étant fixée à l'extrémité libre du longeron de guidage (6) et l'autre des deux parties étant fixée dans le prolongement du longeron de guidage (6) dans la région de l'alésage de guidage (7), **caractérisé en ce que** le capteur de champ magnétique est constitué d'un capteur de Hall (31) et d'un aimant permanent (32) et la sortie de signal (42) du capteur de champ magnétique (31) est connectée à une unité d'analyse électronique (40) qui est en outre connectée à la sortie de signal (51) d'un capteur supplémentaire (50) détectant la course de rapprochement (Z) du frein à disque, l'unité d'analyse électronique (40) présentant un organe de soustraction.

2. Dispositif selon la revendication 1, **caractérisé en ce que** l'extrémité non libre du longeron de guidage (6) est fixée au support de frein (2) et l'alésage de guidage (7) se trouve dans l'étrier de frein (4).

3. Dispositif selon l'une quelconque des revendications 1 ou 2, **caractérisé en ce que** l'aimant permanent (32) est fixé sur le longeron de guidage (6) et le capteur de Hall (31) est fixé dans la région de l'alésage de guidage (7).

4. Dispositif selon la revendication 3, **caractérisé en ce que** le capteur de Hall (31) est fixé à l'intérieur à un capuchon (34) qui ferme l'alésage de guidage (7) dans le prolongement du longeron de guidage (6).

5. Dispositif de détermination de l'épaisseur de garnitures de frein d'un frein à disque constitué d'un support de frein (2) fixé au véhicule et d'un étrier de frein (4) sollicitant les garnitures de frein (11, 12) contre un disque de frein (1), l'étrier de frein (4) étant déplacé longitudinalement par rapport au support de frein (2) par le biais d'un guide longitudinal (5) constitué d'un alésage de guidage (7) et d'un longeron de guidage (6) disposé dans celui-ci, et un moyen de détection de distance étant disposé dans la région du guide longitudinal (5), lequel est un capteur de distance (31), **caractérisé en ce qu'**une unité d'analyse électronique (40) connectée à une sortie de signal (42) du capteur de distance (31) est en outre connectée à la sortie de signal (51) d'un capteur supplémentaire (50) détectant la course de rapprochement (Z) du frein à disque, et **en ce que** l'unité d'analyse électronique (40) présente un organe de soustraction (41).
